# FASCICULE DE BREVET EUROPEEN

(11) **EP 1 026 567 B1**
(45) Date de publication et mention de la délivrance du brevet: **29.09.2004**
(21) Numéro de dépôt: 00400015.4
(22) Date de dépôt: 05.01.2000
(51) Int. Cl.: G05D 16/20, F04D 27/00

(54) **Procédé et installation de régulation d'une centrale de production de vide médical**
Prozess und Vorrichtung zur Regelung einer zentralen Vakuumanlage für medizinischen Gebrauch
Process and installation for regulating a central vacuum production center for medical use

(30) Priorité: 02.02.1999 FR 9901164
(43) Date de publication de la demande: 09.08.2000
(73) Titulaire: AIR LIQUIDE SANTE (INTERNATIONAL), 75007 Paris (FR)
(72) Inventeur: Guillet-Belaud, Emmanuel, 75007 Paris (FR); Montausier, Robert, 95490 Vaureal (FR); Beauvois, Didier, 75015 Paris (FR)
(74) Mandataire: Pittis, Olivier

(56) Documents cités:
- EP-A- 0 442 383
- DE-A- 2 417 183
- US-A- 4 701 192
- US-A- 4 991 253
- US-A- 5 245 857
- US-A- 5 813 426

## Description

La présente invention concerne un procédé et une installation de régulation du niveau de pression régnant dans une canalisation ou un réseau de canalisations de vide, en particulier situé au sein d'un bâtiment hospitalier, ledit niveau de pression étant susceptible de varier au cours du temps, notamment en cas de forte demande en vide ainsi distribué d'un ou plusieurs sites utilisateurs.

Il est connu d'utiliser le vide et les propriétés du vide dans de nombreux secteurs de l'industrie, notamment dans le domaine médical ou le domaine alimentaire.

Ainsi, dans le domaine médical, les bâtiments hospitaliers sont souvent parcourus par un réseau de canalisation de vide permettant d'amener une source de dépression, c'est-à-dire un vide, au sein des salles de soins ou des blocs opératoires où ladite source de dépression ou de vide peut être utilisée à des fins diverses et variées, par exemple être appliquée à l'aspiration de liquides corporels au moyen d'instruments adéquats, par exemple lors d'une intervention chirurgicale ou analogue.

Or, le problème qui se pose classiquement est celui de pouvoir réguler le niveau de dépression, c'est-à-dire de vide, régnant au sein de la ou du réseau de canalisations de vide, de manière à pouvoir assurer, aux sites utilisateurs, un niveau de pression suffisamment bas pour pouvoir assurer les divers applications auxquelles le vide est destiné, en général un niveau de dépression ou de vide inférieur à 0,5.10⁵ Pa.

Pour répondre à ce problème, plusieurs installations et procédés de régulation ont déjà été proposés.

Ainsi, il est connu une installation ou centrale de vide médical permettant de maintenir un niveau de dépression inférieur à 0,5.10⁵ Pa au sein d'une ou plusieurs canalisations de vide, se composant d'une ou plusieurs pompes à vide reliées pneumatiquement auxdites canalisations de vide, de moyens de détermination de la pression au sein desdites canalisations de vide et transmettant des informations de pression à des moyens de pilotage commandant le fonctionnement ou l'arrêt de la ou desdites pompes à vide en fonction du niveau de pression détecté par lesdits moyens dé détermination de la pression.

Cependant, ce type de dispositif bien que très simple de par sa conception présente l'inconvénient de requérir, par ailleurs, l'incorporation de plusieurs capacités tampons de grand volume reliées aux canalisations de vide, de manière à pouvoir répondre quasi instantanément à une forte demande des sites utilisateurs de vide et/ou à éviter une détérioration rapide des pompes à vide.

En effet, le fonctionnement de sites d'installation nécessite des démarrages assez brusques et incessants des pompes à vide pour permettre de réguler le niveau de dépression, c'est-à-dire le niveau de vide, au sein des canalisations de vide entre une valeur de pression maximale et une valeur de pression minimale souhaitée, lesdits démarrages fréquents de ces pompes risquant d'endommager rapidement les moteurs entraînant lesdites pompes à vide.

De ce fait, pour éviter ce problème, il est nécessaire d'ajouter plusieurs capacités tampons de grand volume, de manière à minimiser la fréquence de mise en route desdites pompes ; le réseau de canalisations de vide ayant une trop faible capacité tampon pour permettre d'assurer, à lui seul, ce rôle.

On comprend aisément que le fait de devoir prévoir plusieurs capacités tampon de grand volume engendre des inconvénients, à savoir un encombrement important dû à la taille de ces capacités tampons, qui engendre des difficultés de transport de ces capacités sur leurs sites d'utilisation et des difficultés d'installation de ces capacités tampons qui requiert une place importante, en général un local spécialement destiné à les recevoir.

Afin de résoudre les problèmes existants avec ce type d'installation, il a été proposé d'ajouter des électrovannes en sortie de chaque pompe à vide.

De ce fait, chaque pompe à vide fonctionne pendant une durée déterminée, par exemple 6 à 10 minutes, pendant laquelle l'électrovanne est en position ouverte, ce qui permet de faire diminuer la pression jusqu'à la valeur de dépression souhaitée.

Ensuite, lorsque le niveau de dépression souhaitée est atteint, l'électrovanne se ferme bien que la pompe à vide continue à fonctionner pendant la durée déterminée par exemple 6 à 10 minutes, après quoi la pompe s'arrête.

Lorsque le niveau de pression atteint à nouveau un seuil de dépression maximal, l'électrovanne s'ouvre à nouveau et les étapes précédentes sont répétées.

Cependant, on a constaté que l'utilisation d'électrovannes entre chaque pompe à vide et la canalisation à laquelle est relié chaque pompe à vide engendre des problèmes importants de perte de charges qui entraînent une diminution de rendement importante de chacune desdites pompes à vide, pouvant atteindre 10%, voire plus.

En outre, les électrovannes existant actuellement sont sujettes à des problèmes de fiabilité, en particulier dans le cas d'électrovannes à membranes, car celles-ci ne sont pas spécialement conçues pour des pressions inférieures à 10⁵ Pa, c'est-à-dire pour le vide.

Bien qu'il soit possible de remplacer les électrovannes à membranes par des électrovannes mieux adaptées au vide, telles les électrovannes dites "à tiroir", ces dernières sont, d'une part, d'un coût assez élevé et, d'autre part, ne permettent pas de résoudre le problème du fonctionnement pour rien des pompes à vide, lorsque l'électrovanne est fermée et que, par contre, le temps de fonctionnement préfixé de la pompe à vide ne s'est pas totalement écoulé.

Par ailleurs, dans le domaine industriel, on connait les documents EP-A-5,813,426 et EP-A-442383 qui ont proposé des procédés de régulation de vide utilisables en relation avec des systèmes de treillage automatiques de lait, ainsi que le document US-A-4,701,192 décrivant un système de nettoyage sous vide utilisable en particulier pour éliminer la poussière et les autres impuretés légères se trouvant dans l'air de stations de travail industrielles.

Le but de la présente invention est donc de pallier les problèmes sus-mentionnés, c'est-à-dire de proposer un procédé et une installation de régulation du niveau de dépression régnant dans au moins une partie d'au moins une canalisation de vide ou dans un réseau de canalisations de vide où le niveau de dépression, c'est-à-dire le niveau de vide, est susceptible de varier au cours du temps, en particulier du fait de l'utilisation d'une partie du vide par un ou plusieurs sites utilisateurs situés en aval de ladite canalisation de vide ou dudit réseau de canalisations de vide.

La présente invention concerne alors une installation de régulation du niveau de dépression régnant dans au moins une partie d'au moins une canalisation de vide située dans un bâtiment hospitalier, dans laquelle ledit niveau de dépression est susceptible de varier au cours du temps, comportant :
- au moins une canalisation de vide située dans un bâtiment hospitalier,
- au moins une pompe à vide reliée pneumatiquement à ladite canalisation de vide,
- des moyens de détermination de pression pour déterminer la dépression régnant dans au moins une partie de ladite canalisation de vide,
- des moyens de pilotage commandant (arrêt, marche....) au moins une pompe à vide, de préférence plusieurs pompes à vides,
- au moins une ligne de mise à l'atmosphère ayant une première extrémité reliée pneumatiquement à ladite canalisation de vide et ayant une deuxième extrémité libre, ladite ligne de mise à l'atmosphère (L1, L2) comportant un orifice calibré (O1, O2), et
- des moyens de contrôle de passage de fluide agencés sur au moins ladite ligne de mise à l'atmosphère pour permettre de contrôler le passage d'un fluide gazeux dans ladite ligne de mise à l'atmosphère.

Selon le cas, l'installation selon l'invention peut comprendre l'une ou plusieurs des caractéristiques suivantes :
- elle comporte de 2 à 15 pompes à vide reliées pneumatiquement à ladite canalisation de vide, de préférence de 3 à 9 pompes à vides, en particulier plusieurs desdites pompes à vides sont agencées en parallèles ;
- elle comporte plusieurs lignes de mise à l'atmosphère ayant chacune une première extrémité reliée pneumatiquement à au moins une canalisation de vide et une deuxième extrémité libre ;
- chacune des lignes de mise à l'atmosphère comporte un orifice calibré, au moins deux desdits orifices calibrés ayant un diamètre identique ou différent ;
- les moyens de contrôle de passage de fluide sont choisis dans le groupe formé par les électrovannes ou les vannes pneumatiques ;
- les moyens de contrôle de passage de fluide sont commandés par lesdits moyens de pilotage ;
- les moyens de contrôle de passage de fluide sont commandés par lesdits moyens de pilotage, de manière combinée ou autonome, de préférence autonome ;
- elle comporte plusieurs canalisation de vide, de préférence lesdites canalisations de vide forment un réseau de canalisation de vide au sein d'un bâtiment, en particulier un bâtiment hospitalier ;
- elle comporte, en outre, au moins une capacité tampon agencée sur au moins une canalisation de vide.
- des moyens à silencieux agencés à l'extrémité d'entrée de l'air atmosphérique dans la ou les lignes de mise à l'atmosphère.

Par ailleurs, la présente invention concerne également un procédé de régulation du niveau de dépression régnant dans au moins une partie d'au moins une canalisation de vide située dans un bâtiment hospitalier et dans laquelle ledit niveau de dépression est susceptible de varier au cours du temps, dans lequel :
(a) on détermine une valeur de dépression régnant dans au moins une partie d'au moins la canalisation de vide,
(b) on compare la valeur de dépression déterminée à l'étape (a) avec une valeur de dépression maximale (VDmax) préfixée avec VDmax < 10⁵ Pa,
(c) lorsque à l'étape (b) on a VD ≥ VDmax, on opère une diminution de la pression dans ladite canalisation de vide par pompage pneumatique au moyen d'au moins une pompe à vide reliée pneumatiquement à au moins une partie de ladite canalisation de vide,
(d) lorsque la valeur de dépression régnant dans au moins une partie d'au moins la canalisation de vide soumise au pompage de l'étape (c) est telle que :
   VD ≤ VDmini , où VDmini est une valeur de dépression minimale préfixée avec : VDmini < VDmax < 10⁵ Pa ,
   (i) on arrête au moins une pompe à vide ayant fonctionné pendant une durée prédéterminée ; et/ou
   (ii) on fait communiquer pneumatiquement au moins une partie de ladite canalisation de vide avec une source d'air ayant une pression de compensation telle que : Pc > VDmax, tout en continuant à opérer un pompage pneumatique au moyen d'au moins une pompe à vide reliée pneumatiquement à au moins une partie de ladite canalisation de vide, ladite source d'air comprenant au moins une ligne de mise à l'atmosphère (L1, L2) reliée pneumatiquement à la canalisation de vide et comportant un orifice calibré (O1, O2).

Selon le cas, le procédé selon l'invention peut comprendre l'une ou plusieurs des caractéristiques suivantes:
- à l'étape (d), la source de gaz ayant une pression de compensation est l'atmosphère, de préférence la mise en communication pneumatique de la canalisation de vide avec l'atmosphère se fait au moyen d'au moins une ligne de mise à l'atmosphère ayant une première extrémité reliée pneumatiquement à ladite canalisation de vide et ayant une deuxième extrémité libre ;
- le passage de flux gazeux dans au moins une ligne de mise à l'atmosphère est contrôlé par des moyens de contrôle de passage de fluide agencés sur au moins ladite ligne de mise à l'atmosphère et/ou en ce que le débit de passage du flux gazeux dans au moins une ligne de mise à l'atmosphère est réalisé au moyen d'au moins un orifice calibré agencé dans ladite ligne de mise à l'atmosphère ;
- VDmini est compris entre 30 000 Pa et 38 000 Pa ;
- VDmax est compris entre 42 000 Pa et 50 000 Pa ; et/ou
- dt est compris entre 1 et 120 minutes, de préférence entre 5 et 90 minutes.

Selon un autre aspect l'invention concerne également l'utilisation de l'installation selon l'invention ou d'un procédé selon l'invention pour réguler ou ajuster le niveau de pression c'est-à-dire de vide, au sein d'un réseau de canalisations de vide parcourant un bâtiment hospitalier.

La présente invention va maintenant être décrite plus en détail à l'aide des figures annexées données à titre illustratif, mais non limitatif de l'invention, parmi lesquelles les figures 1 et 2 représentent des schémas d'installation selon l'art antérieur, alors que la figure 3 représente une installation selon la présente invention.

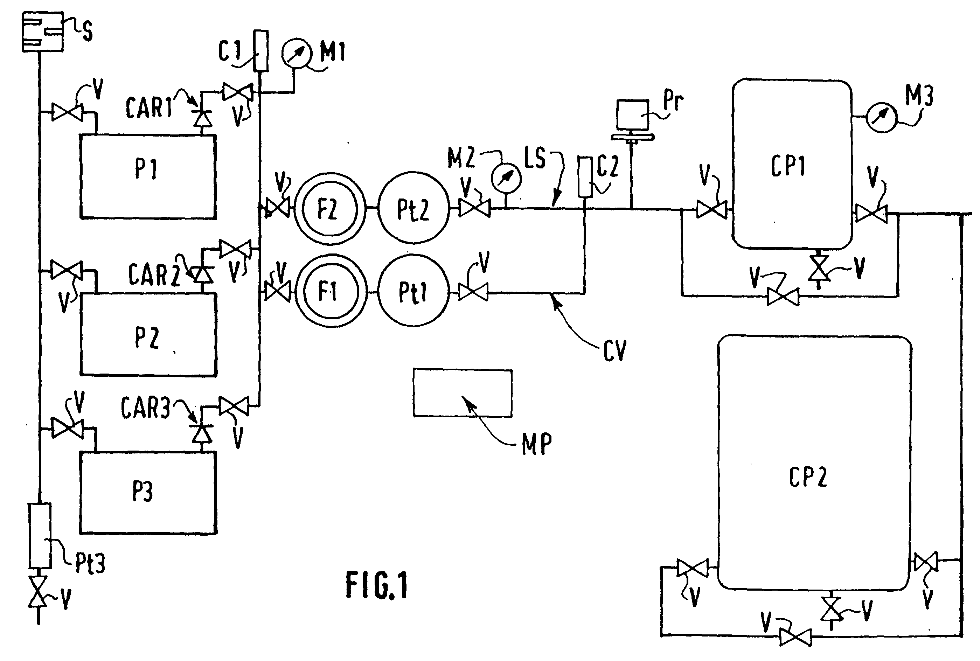

Plus précisément, la figure 1 représente le schéma d'une installation selon l'art antérieur du type comportant plusieurs capacités tampons de grand volume.

Cette installation ou centrale de vide médical se compose schématiquement de 3 pompes à vide P1, P2, P3 placées en parallèle, reliées à une canalisation de vide, sur laquelle sont agencées deux capacités tampons CP1, CP2 de grand volume.

En outre, on voit que l'installation comporte également des vannes V, par exemple des vannes de types quart de tour à boisseau sphérique, des capteurs C1, C2 analogiques de pression, un pressostat Pr, des manomètres M1, M2, M3, ainsi que des clapets anti-retour CAR1, CAR2, CAR3 agencés en amont de pompes à vide P1, P2, P3.

L'installation comporte également une ligne de vide de secours LS permettant de pallier toute déficience de la canalisation de vide CV et permettant de faciliter l'entretien de ladite canalisation de vide CV, en particulier le changement du filtre à bactéries F1 et la vidange du pot point bas Pt1 dont la fonction est de recueillir ou collecter les éventuels affluents liquides ou solides.

La ligne de secours LS comporte également un filtre à bactéries et un pot point bas Pt2.

Par ailleurs, les pompes à vide P1 à P3 sont reliées en aval, à une canalisation d'évacuation des gaz pompés par lesdites pompes P1 à P3, laquelle ligne est munie d'un silencieux S par lequel les gaz sont rejetés à l'atmosphère et d'un pot point bas Pt3 muni d'une vanne V de vidange.

Comme expliqué précédemment, ce type d'installation présente l'inconvénient de mettre en oeuvre des capacités tampons de grand volume destinées à éviter une détérioration des moteurs des pompes à vide P1 à P3.

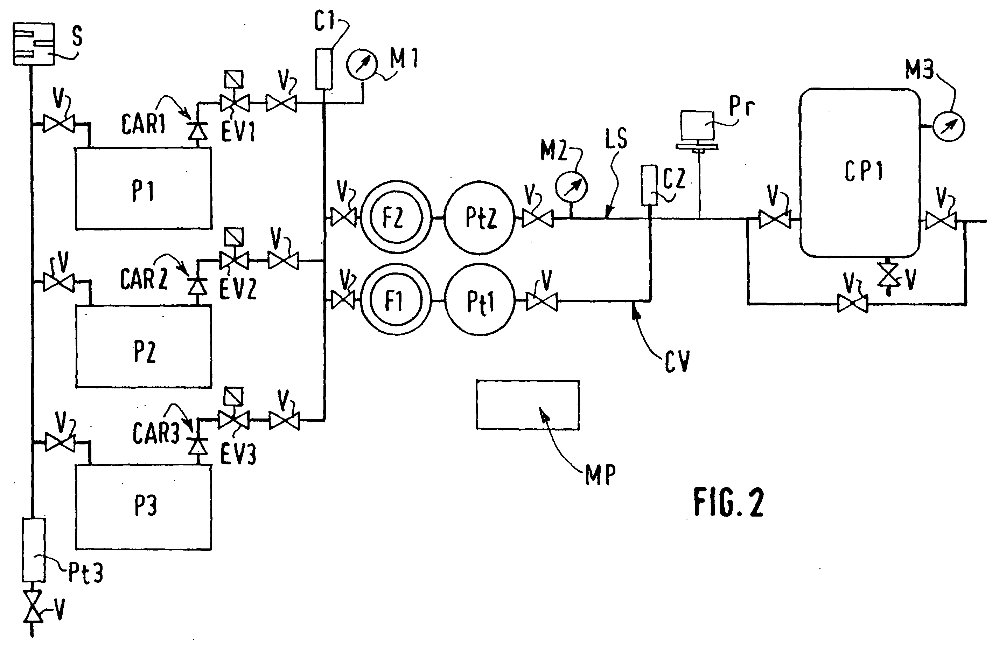

La figure 2 représente, quant à elle, un schéma d'une installation selon l'art antérieur sensiblement analogue à celle de la figure 1, à l'exception du fait que les deux capacités tampons CP1 et CP2 de grand volume présentent sur la figure 1, ont été supprimées et remplacées par une capacité tampon unique CP1 de plus petit volume.

En outre, on constate que comme expliqué précédemment, des électrovannes EV1, EV2 et EV3 ont été installées, respectivement, en amont de chacune des pompes P1, P2 et P3, de manière à pouvoir compenser la suppression des capacités tampon de grand volume.

Comme expliqué ci-dessus, ce type d'installation présente, quant à elle, les inconvénients, d'une part, d'engendrer des pertes de charges importantes ayant un impact négatif sur le rendement de chacune des pompes à vide et, d'autre part, de conduire à un remplacement assez fréquent des électrovannes lorsque celles-ci ne sont pas prévues spécialement pour un réseau de vide ou, le cas échéant, de rendre obligatoire l'utilisation d'électrovannes conçues pour le vide mais dont le coût est très élevé.

De plus, un autre inconvénient du dispositif de la figure 2 est que les pompes à vide continuent à fonctionner même lorsque les électrovannes EV1 à EV3 sont en position fermée.

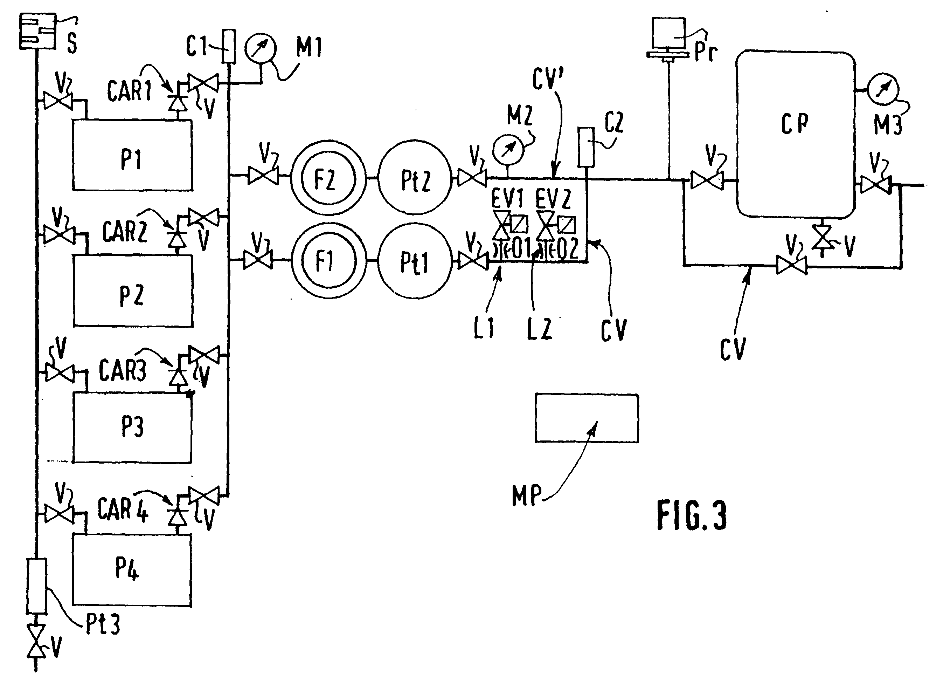

La solution apportée par la présente invention, est proposée sur la figure 3, laquelle est analogue à la figure 2, à l'exception du fait que les électrovannes EV1, EV2 et EV3 présentent en amont des pompes à vide ont été supprimées, alors que des lignes L1 et L2 supplémentaires ont été rajoutées sur la canalisation de vide CV.

Plus précisément, les lignes L1 et L2 ont chacune une de leurs extrémités reliées pneumatiquement à la canalisation de vide CV et leurs autres extrémités libres, c'est-à-dire communiquant pneumatiquement avec l'atmosphère.

Par ailleurs, chacune des lignes L1 et L2 de mise à l'atmosphère, comporte un dispositif silencieux agencé au niveau de l'extrémité d'entrée de l'air, ainsi que des moyens de contrôle de passage de fluide, c'est-à-dire d'air, par exemple des électrovannes commandées par des moyens de pilotage MP et comportent, en outre, chacune un orifice calibré O1, O2, respectivement.

Enfin, le nombre de pompes à vide présentes dans l'installation a été augmenté, mais les pompes à vide selon la présente invention sont plus petites que celles des solutions proposées dans l'art antérieur, à débit d'utilisation du vide identique.

Selon la présente invention, on utilise 5 pompes à vide de 40 m^{3/}h chacune, alors que dans l'art antérieur selon la figure 1 ou la figure 2, on utilise 3 pompes à vide de 100 m³/h chacune.

De là, le dispositif selon l'invention présente l'avantage de pouvoir s'adapter facilement à la demande en vide des sites utilisateurs.

En effet, lorsque la demande en vide des sites utilisateurs est moyenne ou élevée, les pompes à vide sont commandées pour fonctionner en continu pour une durée déterminée, par exemple 1 heure, ce qui permet, d'une part, d'assurer un niveau de vide inférieur à une valeur maximale, par exemple 46 000 Pa, et ce, malgré la demande importante des sites utilisateurs et, d'autres part, d'éviter des mises en marches et arrêts successifs incessants des pompes à vide, comme cela se produit sur les installations de l'art antérieur.

A l'inverse, lorsque la demande en vide des sites utilisateurs est faible, les pompes à vide sont quand même mises en route pour une durée minimale prédéterminée, par exemple 20 minutes.

Dans ce cas, si la valeur de dépression descend en dessous d'une valeur minimale préfixée, par exemple en dessous de 35 000 Pa, alors selon le cas, on arrête la ou les pompes à vide ayant fonctionnées pendant une durée supérieure ou égale à la durée de fonctionnement préfixée, par exemple, les pompes ayant tournées plus de 20 minutes, alors qu'on continue à faire fonctionner les pompes n'ayant pas encore atteint cette durée de fonctionnement préfixée, tout en ouvrant une ou plusieurs des électrovannes EV1 et EV2 agencées sous les lignes L1 et L2 de mise à l'atmosphère, ce qui engendre alors une entrée d'un flux d'air atmosphérique dans la ligne de mise sous vide.

L'entrée de l'air dans la ligne de mise sous vide engendre alors une augmentation artificielle de la pression au sein de la canalisation de vide, ce qui permet de pallier la faible demande des sites utilisateurs et permet, en outre, à la fois de maintenir la valeur de dépression entre les valeurs de dépression minimale et maximale souhaitées à l'intérieur de la ligne de vide 2 et de continuer à laisser fonctionner les pompes à vide, sans risquer de voir celles-ci se détériorer.

Afin de mieux contrôler le débit du flux d'air entant par l'une et/ou l'autres des lignes L1, L2 de mise à l'atmosphère, lesdites lignes L1, L2 de mise à l'atmosphère comportent des orifices calibrés O1 et O2, respectivement, de même diamètre ou de diamètres différents, par exemple des orifices calibrés ayant un diamètre correspondant à la moitié du débit nominal d'une pompe à vide pour une pression de 34 000 Pa.

A titre d'exemple, les orifices calibrés peuvent avoir un diamètre allant de 2 à 10 mm.

Lorsque la demande en vide des sites utilisateurs est vraiment très faible, il peut être nécessaire d'augmenter la quantité de flux d'air introduit dans la ligne de vide pour pouvoir compenser le niveau de dépression à l'intérieur de la canalisation de vide en évitant d'arrêter une ou plusieurs pompes à vide.

Pour se faire, l'augmentation de la quantité d'air introduite dans la canalisation de vide peut être obtenue en faisant communiquer la canalisation de vide avec l'atmosphère par le biais des deux lignes de mise à l'atmosphère L1 et L2, munies chacune d'un orifice calibré, éventuellement de calibres différents.

L'installation de l'invention est commandée par des moyens de pilote MP, par exemple un automate programmable, qui gère les informations recueillies par le ou les capteurs de pression C1 et/ou C2 et commande en fonction des valeurs de pression mesurées dans la ou les canalisations de vide, les démarrages et/ou les arrêts des pompes à vide, les ouvertures et/ou fermetures des électrovannes EV1 et/ou EV2, c'est-à-dire les phases de mise en communication de la canalisation de vide avec l'atmosphère, les durées d'ouverture des électrovannes EV1 et EV2 ou de fonctionnement de chacune des pompes à vide.

En outre, l'automate peut également servir à détecter d'éventuels colmatages des filtres et/ou être relié à un système de surveillance à distance du fonctionnement de l'installation et/ou gérer une ou des alarmes, notamment des alarmes permettant de surveiller le bon fonctionnement des pompes et leur démarrages selon des cycles donnés.

Il s'ensuit que le dispositif selon l'invention présente plusieurs avantages par rapport aux dispositifs existants à savoir :
- il est d'encombrement réduit étant donné qu'il ne met en oeuvre qu'une seule capacité tampon de volume réduit ;
- il permet de supprimer la présence d'électrovannes en entrée des pompes à vide, lesquelles électrovannes sont considérées comme étant, d'une part, peu fiables et créant de fortes pertes de charges et, d'autres part, très onéreuses ;
- elle peut être régulée tout en diminuant le temps de marche des pompes à vide grâce à la présence d'un nombre plus important de pompes à vide ayant un débit plus faible et des deux lignes de mise à l'atmosphère commandées par les électrovannes EV1 et EV2 placées en équerre par rapport à la canalisation de vide CV ;
- on obtient un gain de rendement de l'ordre de 10% sur chacune des pompes à vide ;
- la flexibilité de l'installation est accrue et ce, quel que soit le débit des sites utilisateurs ;
- elle accroît la sécurité grâce au nombre plus important de pompes, en effet, en cas de défaillance d'une des pompes les autres pompes présentes pourront prendre le relais ; et
- elle permet l'utilisation de pompe "à eau" à anneaux liquides, telles les pompes commercialisées par la société SIEMENS sous la référence ELMO L ;
- elle permet, dans certains cas, d'augmenter l'autonomie en eau des pompes à anneaux liquides de ce type par introduction d'air humide par les lignes L1 et L2, par exemple l'air refoulé par les pompes en vide limite ; et
- elle permet d'éviter de faire fonctionner les pompes en vide limite (cas de la Fig. 2, lorsque les électrovannes EV sont fermées) car cela peut provoquer des problèmes de lubrification desdites pompes ou imposer l'utilisation d'huiles synthétiques onéreuses.

En outre, bien que sur la figure 3, les lignes L1 et L2 soient positionnées entre la capacité tampon CP et les pompes à vides P1 à P4, il est également possible, voire souhaitable, dans certains cas, de les placer entre ladite capacité tampon CP et le ou les sites utilisateurs de vide.

La présente invention permet de gérer efficacement une ou plusieurs canalisations de vide notamment au sein d'un bâtiment hospitalier, tels un hôpital, une clinique, une maison de retraite ou, selon le cas, au sein d'un bâtiment ou un laboratoire de recherche.

## Revendications

1. Installation de régulation du niveau de dépression régnant dans au moins une partie d'au moins une canalisation de vide située dans un bâtiment hospitalier, dans laquelle ledit niveau de dépression est susceptible de varier au cours du temps, comportant :
- au moins une canalisation de vide (CV) située dans un bâtiment hospitalier,
- au moins une pompe à vide (P1, P2, P3, P4) reliée pneumatiquement à ladite canalisation de vide (CV),
- des moyens de détermination (C2) de pression pour déterminer la dépression régnant dans au moins une partie de ladite canalisation de vide (CV),
- des moyens de pilotage (MP) commandant au moins ladite au moins une pompe à vide (P1, P2, P3, P4),
- au moins une ligne de mise à l'atmosphère (L1, L2) ayant une première extrémité reliée pneumatiquement à ladite canalisation de vide et ayant une deuxième extrémité libre, ladite ligne de mise à l'atmosphère (L1, L2) comportant un orifice calibré (O1, O2), et
- des moyens de contrôle (EV1, EV2) de passage de fluide agencés sur au moins ladite ligne de mise à l'atmosphère (L1, L2) pour permettre de contrôler le passage d'un fluide gazeux dans ladite ligne de mise à l'atmosphère (L1, L2).

2. Installation selon la revendication 1, **caractérisée en ce qu'**elle comporte de 2 à 15 pompes à vide (P1, P2, P3, P4) reliées pneumatiquement à ladite canalisation de vide (CV), de préférence de 3 à 9 pompes à vides, en particulier plusieurs desdites pompes à vides sont agencées en parallèle.

3. Installation selon l'une des revendications 1 ou 2, **caractérisée en ce qu'**elle comporte plusieurs lignes de mise à l'atmosphère (L1, L2) ayant chacune une première extrémité reliée pneumatiquement à au moins une canalisation de vide (CV) et une deuxième extrémité libre.

4. Installation selon l'une des revendications 1 à 3, **caractérisée en ce que** chacune des lignes de mise à l'atmosphère (L1, L2) comporte un orifice calibré (O1, O2), au moins deux desdits orifices calibrés (O1, O2) ayant un diamètre identique ou différent.

5. Installation selon l'une des revendications 1 à 4, **caractérisée en ce que** les moyens de contrôle (EV1, EV2) de passage de fluide sont choisis dans le groupe formé par les électrovannes ou les vannes pneumatiques.

6. Installation selon l'une des revendications 1 à 5, **caractérisée en ce que** les moyens de contrôle (EV1, EV2) de passage de fluide sont commandés par lesdits moyens de pilotage (MP), de manière combinée ou autonome, de préférence autonome.

7. Installation selon l'une des revendications 1 à 6, **caractérisée en ce qu'**elle comporte plusieurs canalisation de vide (CV), de préférence lesdites canalisations de vide (CV) forment un réseau de canalisation de vide (CV) au sein d'un bâtiment, en particulier un bâtiment hospitalier.

8. Installation selon l'une des revendications 1 à 7, **caractérisée en ce qu'**elle comporte, en outre, au moins une capacité tampon (CP) agencée sur au moins une canalisation de vide (CV).

9. Procédé de régulation du niveau de dépression régnant dans au moins une partie d'au moins une canalisation de vide située dans un bâtiment hospitalier et dans laquelle ledit niveau de dépression est susceptible de varier au cours du temps, dans lequel :
(a) on détermine une valeur de dépression (VD) régnant dans au moins une partie d'au moins la canalisation de vide,
(b) on compare la valeur de dépression (VD) déterminée à l'étape (a) avec une valeur de dépression maximale (VDmax) préfixée avec VDmax < 10⁵ Pa,
(c) lorsque à l'étape (b) on a VD ≥ VDmax, on opère une diminution de la pression dans ladite canalisation de vide par pompage pneumatique au moyen d'au moins une pompe à vide reliée pneumatiquement à au moins une partie de ladite canalisation de vide,
(d) lorsque la valeur de dépression (VD) régnant dans au moins une partie d'au moins la canalisation de vide soumise au pompage de l'étape (c) est telle que : VD ≤ VDmini , où VDmini est une valeur de dépression minimale préfixée avec : VDmini < VDmax < 10⁵ Pa ,
(i) on arrête au moins une pompe à vide ayant fonctionné pendant une durée (dt) prédéterminée ; et/ou
(ii) on fait communiquer pneumatiquement au moins une partie de ladite canalisation de vide avec une source d'air ayant une pression de compensation (Pc) telle que : Pc > VDmax, tout en continuant à opérer un pompage pneumatique au moyen d'au moins une pompe à vide reliée pneumatiquement à au moins une partie de ladite canalisation de vide, ladite source d'air comprenant au moins une ligne de mise à l'atmosphère (L1, L2) reliée pneumatiquement à la canalisation de vide et comportant un orifice calibré (O1, O2).

10. Procédé selon la revendication 9, **caractérisé en ce qu'**à l'étape (d), la source de gaz ayant une pression de compensation (Pc) est l'atmosphère, de préférence la mise en communication pneumatique de la canalisation de vide avec l'atmosphère se fait au moyen d'au moins une ligne de mise à l'atmosphère (L1, L2) ayant une première extrémité reliée pneumatiquement à ladite canalisation de vide et ayant une deuxième extrémité libre.

11. Procédé selon l'une des revendications 9 ou 10, **caractérisé en ce que** le passage de flux gazeux dans au moins une ligne de mise à l'atmosphère (L1, L2) est contrôlé par des moyens de contrôle (EV1, EV2) de passage de fluide agencés sur au moins ladite ligne de mise à l'atmosphère (L1, L2) et/ou **en ce que** le débit de passage du flux gazeux dans au moins une ligne de mise à l'atmosphère (L1, L2) est réalisé au moyen d'au moins un orifice calibré (O1, O2) agencé dans ladite ligne de mise à l'atmosphère (L1, L2).

12. Procédé selon l'une des revendications 9 à 11, **caractérisé en ce que** :
- VDmini est compris entre 30 000 Pa et 38 000 Pa ;
- VDmax est compris entre 42 000 Pa et 50 000 Pa ; et/ou
- dt est compris entre 1 et 120 minutes, de préférence entre 5 et 90 minutes.

13. Utilisation de l'installation selon l'une des revendications 1 à 8 ou d'un procédé selon l'une des revendications 9 à 12 pour réguler le niveau de dépression régnant dans une ou plusieurs canalisations de vide parcourant un bâtiment hospitalier, en particulier un réseau de canalisations de vide.

## Patentansprüche

1. Vorrichtung zur Regelung des Unterdruckpegels, der in mindestens einem Teil von mindestens einer Vakuumleitung, die sich in einem Spitalsgebäude befindet, herrscht, in der sich der Unterdruckpegel mit der Zeit verändern kann, umfassend:
- mindestens eine Vakuumleitung (CV), die sich in einem Spitalsgebäude befindet,
- mindestens eine Vakuumpumpe (P1, P2, P3, P4), die pneumatisch mit der Vakuumleitung (CV) verbunden ist,
- Mittel (C2) zur Druckbestimmung, um den Unterdruck zu bestimmen, der in mindestens einem Teil der Vakuumleitung (CV) herrscht,
- Steuermittel (MP), die mindestens die mindestens eine Vakuumpumpe (P1, P2, P3, P4) steuern,
- mindestens eine Entlüftungsleitung (L1, L2), die ein erstes Ende, das pneumatisch mit der Vakuumleitung verbunden ist, und ein zweites freies Ende aufweist, wobei die Entlüftungsleitung (L1, L2) eine kalibrierte Öffnung (O1, O2) umfasst, und
- Mittel (EV1, EV2) zur Kontrolle der Fluiddurchflussmenge, die auf der mindestens einen Entlüftungsleitung (L1, L2) angeordnet sind, um es zu ermöglichen, die Durchflussmenge eines gasförmigen Fluids in der Entlüftungsleitung (L1, L2) zu kontrollieren.

2. Vorrichtung nach Anspruch 1, **dadurch gekennzeichnet, dass** sie 2 bis 15 Vakuumpumpen (P1, P2, P3, P4) umfasst, die pneumatisch an die Vakuumleitung (CV) angeschlossen sind, vorzugsweise 3 bis 9 Vakuumpumpen, wobei insbesondere mehrere der Vakuumpumpen parallel angeordnet sind.

3. Vorrichtung nach einem der Ansprüche 1 oder 2, **dadurch gekennzeichnet, dass** sie mehrere Entlüftungsleitungen (L1, L2) umfasst, die jeweils ein erstes Ende, das pneumatisch an mindestens eine Vakuumleitung (CV) angeschlossen ist, und ein zweites freies Ende umfassen.

4. Vorrichtung nach einem der Ansprüche 1 bis 3, **dadurch gekennzeichnet, dass** jede der Entlüftungsleitungen (L1, L2) eine kalibrierte Öffnung (O1, O2) umfasst, wobei mindestens zwei der kalibrierten Öffnungen (O1, O2) einen identischen oder unterschiedlichen Durchmesser aufweisen.

5. Vorrichtung nach einem der Ansprüche 1 bis 4, **dadurch gekennzeichnet, dass** die Mittel (EV1, EV2) zur Kontrolle der Fluiddurchflussmenge in der Gruppe, die von den Magnetventilen oder den Druckluftventilen gebildet ist, ausgewählt werden.

6. Vorrichtung nach einem der Ansprüche 1 bis 5, **dadurch gekennzeichnet, dass** die Mittel (EV1, EV2) zur Kontrolle der Fluiddurchflussmenge von den Steuermitteln (MP) auf kombinierte oder autonome Weise, vorzugsweise auf autonome Weise, gesteuert werden.

7. Vorrichtung nach einem der Ansprüche 1 bis 6, **dadurch gekennzeichnet, dass** sie mehrere Vakuumleitungen (CV) umfasst, dass diese Vakuumleitungen (CV) vorzugsweise ein Vakuumleitungsnetz (CV) innerhalb eines Gebäudes, insbesondere eines Spitalsgebäudes, bilden.

8. Vorrichtung nach einem der Ansprüche 1 bis 7, **dadurch gekennzeichnet, dass** sie ferner mindestens eine Pufferkapazität (CP) umfasst, die auf mindestens einer Vakuumleitung (CV) angeordnet ist.

9. Verfahren zur Regelung des Unterdruckpegels, der in mindestens einem Teil von mindestens einer Vakuumleitung, die sich in einem Spitalsgebäude befindet und in der sich der Unterdruckpegel mit der Zeit verändern kann, herrscht, bei dem:
(a) ein Unterdruckwert (VD) bestimmt wird, der in mindestens einem Teil der mindestens einen Vakuumleitung herrscht,
(b) der Unterdruckwert (VD), der in Schritt (a) bestimmt wurde, mit einem maximalen Unterdruckwert (VDmax), der mit VDmax < 10⁵ Pa vorbestimmt ist, verglichen wird,
(c) wenn sich in Schritt (b) VD ≥ VDmax ergibt, eine Minderung des Drucks in der Vakuumleitung durch Druckluftpumpen mittels mindestens einer Vakuumpumpe, die pneumatisch an mindestens einen Teil der Vakuumleitung angeschlossen ist, vorgenommen wird,
(d) wenn der Wert des Unterdrucks (VD), der in mindestens einem Teil der mindestens einen Vakuumleitung, die dem Pumpen aus Schritt (c) unterzogen wird, beträgt: VD ≤ VDmini, wobei VDmini ein minimaler Unterdruckwert ist, der mit: VDmini < VDmax < 10⁵ Pa vorbestimmt wurde,
(i) mindestens eine Vakuumpumpe, die während einer vorbestimmten Dauer (dt) in Betrieb war, eingestellt wird; und/oder
(ii) mindestens ein Teil der Vakuumleitung pneumatisch mit einer Luftquelle in Verbindung gebracht wird, die einen Ausgleichsdruck (Pc): Pc > VDmax, aufweist, wobei weiterhin ein Druckluftpumpen mittels mindestens einer Vakuumpumpe durchgeführt wird, die pneumatisch an mindestens einen Teil der Vakuumleitung angeschlossen ist, wobei die Luftquelle mindestens eine Entlüftungsleitung (L1, L2) umfasst, die pneumatisch an die Vakuumleitung angeschlossen ist und eine kalibrierte Öffnung (O1, O2) umfasst.

10. Verfahren nach Anspruch 9, **dadurch gekennzeichnet, dass** in Schritt (d) die Gasquelle, die einen Ausgleichsdruck (Pc) aufweist, die Atmosphäre ist, wobei vorzugsweise die pneumatische Verbindung der Vakuumleitung mit der Atmosphäre mittels mindestens einer Entlüftungsleitung (L1, L2) erfolgt, die ein erstes Ende, das pneumatisch an die Vakuumleitung angeschlossen ist, und ein zweites freies Ende aufweist.

11. Verfahren nach einem der Ansprüche 9 oder 10, **dadurch gekennzeichnet, dass** die Durchflussmenge eines gasförmigen Flusses durch mindestens eine Entlüftungsleitung (L1, L2) durch Mittel (EV1, EV2) zur Kontrolle der Fluiddurchflussmenge kontrolliert wird, die auf der mindestens einen Entlüftungsleitung (L1, L2) angeordnet sind, und/oder dass die Durchflussmenge des Gasflusses durch mindestens eine Entlüftungsleitung (L1, L2) mittels mindestens einer kalibrierten Öffnung (O1, O2) verwirklicht wird, die in der Entlüftungsleitung (L1, L2) angeordnet ist.

12. Verfahren nach einem der Ansprüche 9 bis 11,
**dadurch gekennzeichnet, dass**:
- VDmini zwischen 30 000 Pa und 38 000 Pa liegt;
- VDmax zwischen 42 000 Pa und 50 000 Pa liegt; und/oder
- dt zwischen 1 und 120 Minuten, vorzugsweise zwischen 5 und 90 Minuten liegt.

13. Verwendung der Vorrichtung nach einem der Ansprüche 1 bis 8 und eines Verfahrens nach einem der Ansprüche 9 bis 12 zur Regelung des Unterdruckpegels, der in einer oder mehreren Vakuumleitungen, die durch ein Spitalsgebäude verlaufen, insbesondere einem Vakuumleitungsnetz, herrscht.

## Claims

1. Installation for regulating the level of underpressure prevailing in at least one portion of at least one vacuum line situated in a hospital building, in which installation the said level of underpressure is liable to vary over time, comprising:
- at least one vacuum line (CV) situated in a hospital building,
- at least one vacuum pump (P1, P2, P3, P4) connected pneumatically to the said vacuum line (CV),
- pressure determination means (C2) for determining the underpressure prevailing in at least one portion of the said vacuum line (CV),
- drive means (MP) controlling at least the said at least one vacuum pump (P1, P2, P3, P4),
- at least one venting line (L1, L2) having a first end connected pneumatically to the said vacuum line and having a second free end, and the said venting line (L1, L2) comprising a calibrated orifice (O1, O2), and
- a fluid-flow control means (EV1, EV2) arranged on at least the said venting line (L1, L2) to make it possible to control the flow of a gaseous fluid in the said venting line (L1, L2).

2. Installation according to Claim 1, **characterized in that** it comprises from 2 to 15 vacuum pumps (P1, P2, P3, P4) connected pneumatically to the said vacuum line (CV), preferably from 3 to 9 vacuum pumps, in particular with several of the said vacuum pumps being arranged in parallel.

3. Installation according to either of Claims 1 and 2, **characterized in that** it comprises several venting lines (L1, L2) each having a first end connected pneumatically to at least one vacuum line (CV) and a second free end.

4. Installation according to one of Claims 1 to 3, **characterized in that** each of the venting lines (L1, L2) comprises a calibrated orifice (O1, O2), at least two of the said calibrated orifices (O1, O2) having an identical or different diameter.

5. Installation according to one of Claims 1 to 4, **characterized in that** the fluid-flow control means (EV1, EV2) are selected from the group formed by solenoid valves and pneumatic valves.

6. Installation according to one of Claims 1 to 5, **characterized in that** the fluid-flow control means (EV1, EV2) are controlled by the said drive means (MP) in a combined or autonomous, preferably autonomous, manner.

7. Installation according to one of Claims 1 to 6, **characterized in that** it comprises several vacuum lines (CV), preferably with the said vacuum lines (CV) forming a network of vacuum lines (CV) within a building, in particular a hospital building.

8. Installation according to one of Claims 1 to 7, **characterized in that** it additionally comprises at least one buffer capacity (CP) arranged on at least one vacuum line (CV).

9. Method of regulating the level of underpressure prevailing in at least one portion of at least one vacuum line situated in a hospital building and in which the said level of underpressure is liable to vary over time, in which:
(a) a value of underpressure (VD) prevailing in at least one portion of at least the vacuum line is determined,
(b) the value of underpressure (VD) determined in step (a) is compared with a preset maximum value of underpressure (VDₘₐₓ), where VDₘₐₓ < 10⁵ Pa,
(c) when VD ≥ VDₘₐₓ in step (b), the pressure in the said vacuum line is caused to decrease by pneumatic pumping by means of at least one vacuum pump connected pneumatically to at least one portion of the said vacuum line,
(d) when the value of underpressure (VD) prevailing in at least one portion of at least the vacuum line subjected to pumping in step (c) is such that VD ≤ VDₘᵢₙ, where VDₘᵢₙ is a preset minimum value of underpressure with VDₘᵢₙ < VDₘₐₓ < 10⁵ Pa,
(i) at least one vacuum pump that has operated for a predetermined duration (dt) is stopped; and/or
(ii) at least one portion of the said vacuum line is placed in pneumatic communication with a source of air having a compensation pressure (Pc) such that Pc > VDₘₐₓ, while continuing to carry out pneumatic pumping by means of at least one vacuum pump connected pneumatically to at least one portion of the said vacuum line, the said source of air comprising at least one venting line (L1, L2) connected pneumatically to the vacuum line and comprising a calibrated orifice (O1, O2).

10. Method according to Claim 9, **characterized in that** in step (d), the source of gas having a compensation pressure (Pc) is the atmosphere, the vacuum line preferably being placed in pneumatic communication with the atmosphere by means of at least one venting line (L1, L2) having a first end connected pneumatically to the said vacuum line and having a second free end.

11. Method according to either of Claims 9 and 10, **characterized in that** the flow of the gas stream into at least one venting line (L1, L2) is controlled by fluid-flow control means (EV1, EV2) arranged on at least the said venting line (L1, L2) and/or **in that** the flow of the gas stream into at least one venting line (L1, L2) is achieved by means of at least one calibrated orifice (O1, O2) arranged in the said venting line (L1, L2).

12. Method according to one of Claims 9 to 11, **characterized in that**:
- VDₘᵢₙ is between 30 000 Pa and 38 000 Pa;
- VDₘₐₓ is between 42 000 Pa and 50 000 Pa; and/or
- dt is between 1 and 120 minutes, preferably between 5 and 90 minutes.

13. Use of the installation according to one of Claims 1 to 8 or of a method according to one of Claims 9 to 12 for regulating the level of underpressure prevailing in one or more vacuum lines running through a hospital building, in particular a network of vacuum lines.
